# EUROPEAN PATENT APPLICATION

(11) **EP 4 624 126 A1**
(43) Date of publication of application: **01.10.2025**
(21) Application number: 24812356.4
(22) Date of filing: 26.07.2024
(51) Int. Cl.: B26D 7/26, B26D 1/24

(54) **SLITTER DEVICE**

(30) Priority: 06.02.2024 JP 2024016545
(71) Applicant: Maysun Corporation, Fuji-shi, Shizuoka 416-0946 (JP)
(72) Inventor: ICHIKAWA, Shigeru, Fujinomiya-shi, Shizuoka 418-0005 (JP)
(74) Representative: Müller-Boré & Partner Patentanwälte PartG mbB
(86) International application number: PCT/JP2024/026803
(87) International publication number: WO 2025/169512

(57) **Abstract**

Problem

To provide a slitter device having a novel configuration that allows safe adjustment of a toe-in angle and can cut various sheet-like raw materials with high cut-edge quality.

Solving Means

An extension member 313 is pivotally attached to a raising/lowering body 316 of a knife holder 300 by a bolt 312. A helical gear 313A configured to mesh with a spur gear 314 is formed at a distal end portion of the extension member 313 opposite to a side where the extension member 313 is pivotally attached. The spur gear 314 is connected to an output shaft of a stepping motor 320 and is rotationally driven by the stepping motor 320. When the spur gear 314 is rotationally driven by the stepper motor 320, the extension member 313 and a knife cartridge attached thereto swing about a shaft of the bolt 312 via the helical gear 313A meshing with the spur gear 314. A rotation surface of the upper blade knife is rotated by this swinging, making it possible to change a toe-in angle.

## Description

### Technical Field

The present invention relates to a slitter device that cuts a sheet-like raw material by two rotary round blades.

### Background Art

In recent years, slitter devices have been used to cut not only paper but also various types of sheet-like raw materials, such as, for example, thin metal films and thin plastic films. For example, electrode materials obtained by applying an active material to sheet-like aluminum foil or copper foil and separators made of very thin plastic and provided between the electrodes, the electrode materials and the separators being used in lithium-ion batteries, are cut using a slitter device. In the case of a lithium ion battery, when a burr or chip not visible by the human eye is present in the vicinity of a cut edge of the aluminum foil or the copper foil, the burr or the chip may penetrate the separator, causing a short circuit between the electrodes and thus a decrease in battery performance or a fire incident. Slitter devices in recent years therefore require high quality with respect to cut edges so as to suppress the occurrence of burrs and chips caused by cutting to the extent possible.

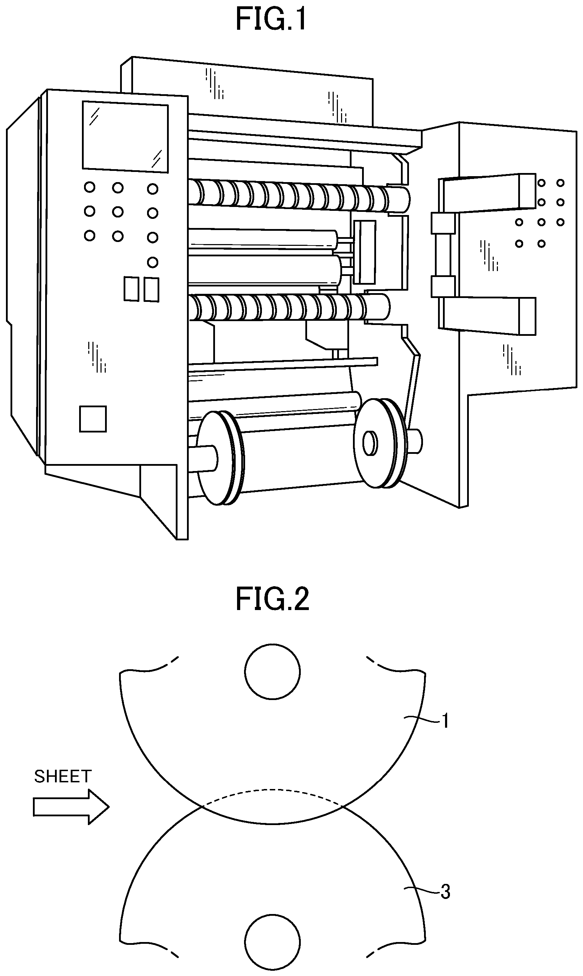

FIG. 1 illustrates an overall external appearance of a slitter device currently in use. A slitter device is typically composed of a feeding section that feeds raw fabric of a sheet-like raw material, a cutting section that cuts the sheet-like raw material, and a winding section that winds the cut sheet-like raw material. Depending on the slitter device, there are slitter devices provided with a plurality of sets of cutting sections, and there are known devices in which the sheet-like raw material is directly fed from a manufacturing line to the cutting section, cut, and then wound by a winding section.

FIG. 2 illustrates an upper blade knife 1 and a lower blade knife 3 provided vertically in the cutting section of the slitter device illustrated in FIG. 1, as viewed from the side. The sheet-like raw material is transported from the left side to the right side in FIG. 2 and cut by the upper blade knife 1 and the lower blade knife 3. As illustrated in FIG. 2, the upper blade knife 1 and the lower blade knife 3 partially overlap each other vertically. This overlap is referred to as an "overlap amount" and determines how much the knives bite into a surface of the sheet material.

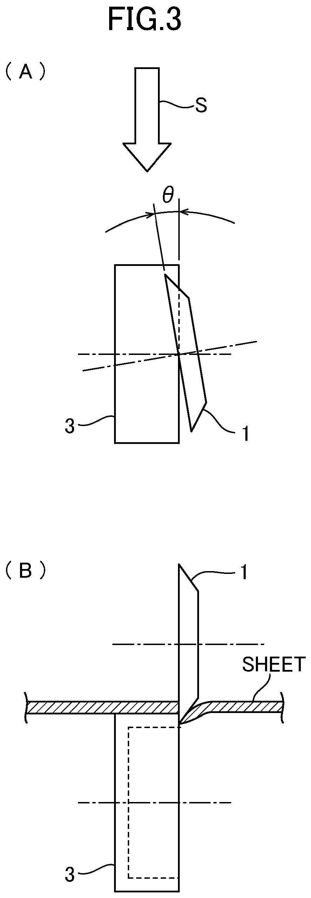

FIG. 3(A) illustrates the upper blade knife 1 and the lower blade knife 3 as viewed from above, and FIG. 3(B) illustrates the upper blade knife 1 and the lower blade knife 3 as viewed from a transport direction of the sheet-like raw material. As illustrated in FIG. 3, the upper blade knife 1 is a plate blade having a disc shape, and a cutting blade is provided around a circumference thereof. The lower blade knife 3 is bowl-shaped, and a cutting blade is provided around an entire circumference of an edge of a top portion of the bowl that comes into contact with the upper blade knife 1. The upper blade knife 1 and the lower blade knife 3, as illustrated in FIG. 3(A), are provided with the upper blade knife 1 being inclined at a slight angle θ with respect to the lower blade knife 3. This angle θ is referred to as a "toe-in angle." Note that, although this angle θ is very small, in FIG. 3(A), the angle θ is illustrated in an exaggerated manner for ease of understanding. During cutting, the upper blade knife 1 is brought into contact with the lower blade knife 3 and both are rotated with this toe-in angle θ applied. A pressure at which the upper blade knife 1 is brought into contact with the lower blade knife 3 is referred to as a "contact pressure."

During cutting, the upper blade knife 1 and the lower blade knife 3 are rotated with the overlap amount, the contact pressure, and the toe-in angle adjusted to respective predetermined values, and the sheet-like raw material is fed from the back side of FIG. 1 (direction of arrow S in FIG. 3(A)) and cut by the upper blade knife 1 and the lower blade knife 3. The cut sheet-like raw material is wound by a winding section provided on the front side of FIG. 1. The "overlap amount," the "contact pressure," and the "toe-in angle" are important factors related to the quality of a cut edge of the sheet-like raw material cut by the slitter device.

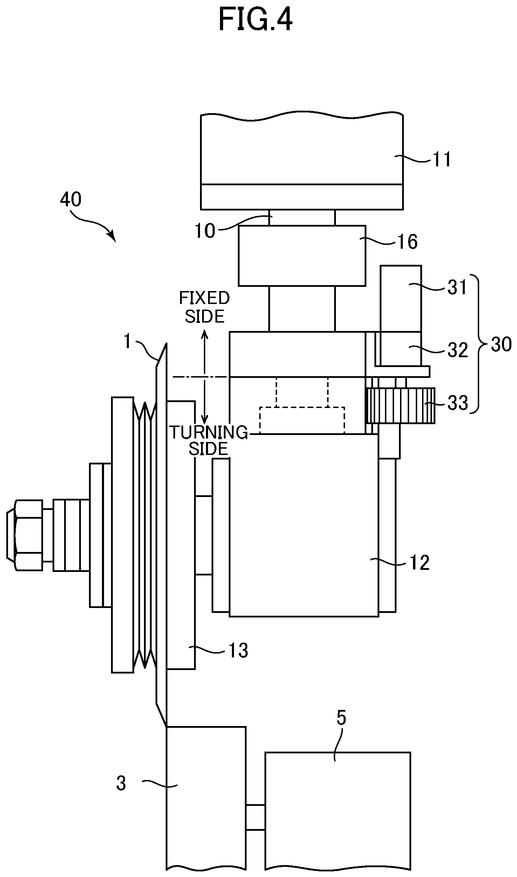

FIG. 4 illustrates the lower blade knife 3 and a lower blade drive motor 5 in the cutting section of the slitter device, and a knife holder 40 in which the upper blade knife 1 is mounted. The knife holder 40 is mainly provided with a main shaft 10, a raising/lowering piston part 11 for raising/lowering this main shaft 10, a laterally moving piston part 12 attached to a lower end portion of the main shaft 10, and an upper blade cartridge 13 mounted on an upper blade drive shaft laterally driven by this laterally moving piston part 12 and rotationally driven by an upper blade drive motor (not illustrated). The upper blade knife 1 is mounted on and held by the upper blade cartridge 13. A known contact pressure sensor 16 that detects the contact pressure between the upper blade knife 1 and the lower blade knife 3 is provided at an intermediate portion of the main shaft 10. Further, the knife holder 40 is provided with a toe-in angle setting device.

A linear sensor is attached to the knife holder 40 illustrated in FIG. 4. On the knife holder 40, which is raised and lowered by an air cylinder or the like, the linear sensor attachment position, which identifies an amount of movement between the position of the main body and the knife mounting section of the lower blade knife 3, is made numerically readable. This read value is configured to be displayable on a digital display that displays a diameter of the upper blade knife 1, and a gain is adjusted so that 1 mm of the linear sensor corresponds to 2 mm on the digital display.

The diameter of the upper blade knife 1 is precisely measured in advance by a digital caliper or the like. Then, using the measured upper blade knife 1, the upper blade knife 1 is mounted on the knife holder 40 and, on the basis of the experience of the operator, the appropriate vertical position and overlap amount of the upper blade knife 1 and lower blade knife 3 are mechanically adjusted in accordance with the material to be cut. In this state, the digital display is electrically or mechanically adjusted by offset adjustment so that the numerical value of the digital display corresponds to the diameter of the upper blade knife 1 measured in advance. Once the above task is completed, the operator can, from the next time the upper blade knife is replaced, set the overlap amount, ensuring that the knife diameter is the diameter measured in advance, without directly visually checking the overlap amount by operating the handle of the raising/lowering device of the knife holder 40 and making adjustments so that the value of the digital display is the same as the diameter of the upper blade knife.

The toe-in angle setting device is composed of a turning mechanism 30 incorporated between the main shaft 10 provided with the contact pressure sensor 16 and the laterally moving piston part 12 in the knife holder 40, and the turning mechanism 30 includes a turning drive motor 31, a reduction gear 32, and a spur gear 33. The spur gear 33 is rotated by the turning drive motor 31 via the reduction gear 32. The laterally moving piston part 12, the upper blade cartridge 13, and the upper blade knife 1 are also referred to as a turning section, and spur gear processing is performed on a portion of the turning section that engages with the spur gear 33. Thus, the spur gear 33 is rotated, turning the lateral moving piston part 12 about the main shaft 10. With such a configuration, a relationship between a rotation angle of the turning drive motor 31 and the toe-in angle, that is, a change amount in toe-in angle when the turning drive motor 31 is rotated, is examined in advance, and the result is acquired as data.

In the cutting section illustrated in FIG. 4, the upper blade knife 1 and the lower blade knife 3 are fixed by adjusting the laterally moving piston part so that a slight contact pressure is applied while observing a contact pressure value displayed on a contact pressure meter (not illustrated). Next, the turning drive motor 31 is driven left and right and, upon finding a point at which the contact pressure value is minimum, that point becomes the zero point of the toe-in angle. Then, to set the toe-in angle to a desired angle, the turning drive motor 31 is rotated by an angle corresponding to that toe-in angle on the basis of the relationship examined in advance.

However, in the toe-in angle setting device illustrated in FIG. 4, the spur gear 33 is used, and thus a problem of backlash caused by a gap between gears cannot be avoided. When backlash exists, a significant setting error of the toe-in angle occurs. Further, when new materials such as a thin metal film or a thin plastic film is cut, narrow-width cutting may be necessary and, as a result, recent slitter devices are required to provide both high cut-edge quality and a reduction in size of the knife holder.

### Summary of the Invention

### Technical Problem

According to one aspect, it is an object of the present invention to provide a slitter device having a configuration that solves various problems in known toe-in angle setting devices, alleviates a workload of an operator who adjusts a toe-in angle, allows the operator to safely adjust the toe-in angle, facilitates cutting of various sheet-like raw materials with high cut-edge quality as compared with known devices, and facilitates adjustment of the toe-in angle without the device being stopped during operation of the device.

### Means for Solving the Problem

(1) A slitter device according to an embodiment of the present invention is a slitter device configured to bring an upper blade knife having a disc shape and a lower blade knife into contact with each other, supply a sheet-shaped raw material between the upper blade knife and the lower blade knife, and cut the sheet-shaped raw material. The slitter device includes an upper blade knife mounting section in which an upper blade knife is mounted, an upper blade knife raising/lowering part configured to raise and lower the upper blade knife mounting section, an extension member to which the upper blade knife mounting section is fixed, the extension member being pivotally attached to the upper blade knife raising/lowering part so that a rotation surface of the mounted upper blade knife rotates and being formed with an end gear at an end portion on a side opposite to the upper blade knife mounting section, a gear member configured to mesh with the end gear of the extension member, and a drive means configured to drive the gear member. The drive means is configured to drive the gear member to swing the extension member and adjust a toe-in angle of the upper blade knife.
(2) In an embodiment of the present invention, in the slitter device according to (1), the drive means is a stepping motor or a motor having a rotational frequency that can be known.
(3) A slitter device in an embodiment of the present invention is a slitter device configured to bring an upper blade knife having a disc shape and a lower blade knife into contact with each other, supply a sheet-shaped raw material between the upper blade knife and the lower blade knife, and cut the sheet-shaped raw material. The slitter device includes an upper blade knife mounting section in which an upper blade knife is mounted, an upper blade knife raising/lowering part to which the upper blade knife mounting section is attached, the upper blade knife raising/lowering part being configured to raise and lower the upper blade knife mounting section and being turnable about a vertical axis of a device main body, a screw plate provided to the upper blade knife raising/lowering part, the screw plate including a first gear provided with a first screw and driven by a drive means, a second gear provided with a second screw, and a rotation transmission means configured to transmit rotation of the first gear to the second gear, and the drive means configured to drive the first gear. The drive means driving the first gear rotates the first gear and the second gear, causing an operation in which one of the first screw or the second screw is pushed out in a direction orthogonal to the screw plate and the other is pulled out in a direction orthogonal to the screw plate, thereby turning the upper blade knife raising/lowering part about a device main body and adjusting a toe-in angle of the upper blade knife.
(4) In an embodiment of the present invention, in the slitter device according to (3), the drive means is a stepping motor or a motor having a rotational frequency that can be known.
(5) In an embodiment of the present invention, in the slitter device according to (3), the rotation transmission means is constituted by an odd number or an even number of auxiliary gears provided between the first gear and the second gear.
(6) In an embodiment of the present invention, in the slitter device according to (3), the rotation transmission means is constituted by a first worm gear and a second worm gear formed on a single shaft, the first worm gear being configured to mesh with the first gear, and the second worm gear being configured to mesh with the second gear to transmit the rotation of the first gear to the second gear.

### Brief Description of Drawings

FIG. 1 is a view illustrating an overall external appearance of a slitter device.
FIG. 2 is a view illustrating an upper blade knife and a lower blade knife provided vertically in a cutting section of the slitter device, as viewed from the side.
FIG. 3(A) illustrates the upper blade knife and the lower blade knife as viewed from above, and FIG. 3(B) illustrates the upper blade knife and the lower blade knife as viewed from a transport direction of a sheet-like raw material.
FIG. 4 is a view illustrating a known knife holder.
FIG. 5(A) is a view of a knife holder in a slitter device according to an embodiment of the present invention as viewed from a direction orthogonal to a transport direction of a sheet, FIG. 5(B) is a view of the knife holder as viewed from the front in the transport direction, and FIG. 5(C) is a view of the knife holder in FIG. 5(A) with a screw plate removed therefrom.
FIG. 6 is a block diagram of a control computer incorporated into a main body of the knife holder in FIG. 5.
FIG. 7 is a top view (upper side) and a front view (lower side) of the screw plate removed from the knife holder in FIG. 5.
FIG. 8 is a view illustrating a modified example of the screw plate illustrated in FIG. 7.
FIG. 9 is a view illustrating a knife holder 300 including a toe-in angle adjustment mechanism in yet another embodiment of the present invention.

### Description of Embodiments

Hereinafter, embodiments of the present invention will be described with reference to the drawings.

As described above, sheet-like raw materials to be cut have been diversified in recent years and requirements for the quality of cut edges have been increased, making it necessary to frequently adjust various conditions such as an overlap amount in accordance with a type of raw material so as to obtain high cut-edge quality. In a known knife holder illustrated in FIG. 4, when a change in the overlap amount is desired, the overlap amount must be manually readjusted accordingly. Further, when a change in an offset amount between an upper blade knife and a lower blade knife (difference between positions of the upper blade knife and the lower blade knife in a transport direction of the sheet-like raw material) is desired, an operator must make readjustments.

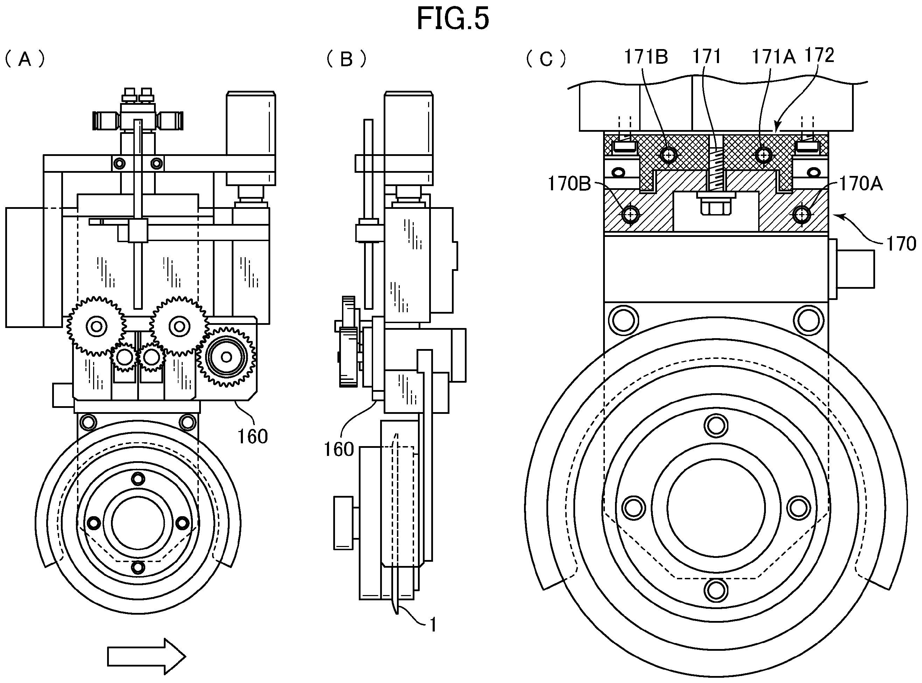

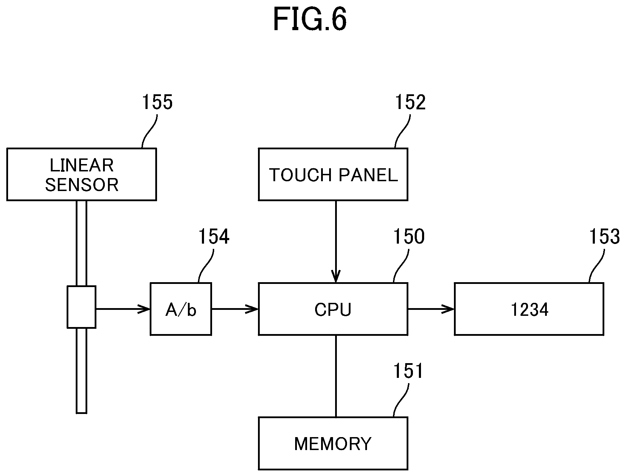

FIG. 5(A) is a view of a knife holder in a slitter device according to an embodiment of the present invention as viewed from a direction orthogonal to the sheet transport direction (direction of the arrow in FIG. 5(A)), FIG. 5(B) is a view of the knife holder as viewed from the front in the transport direction, and FIG. 5(C) is a view of the knife holder in FIG. 5(A) with a screw plate removed therefrom. FIG. 6 is a block diagram of a control computer incorporated into a main body of the knife holder in FIG. 5. The control computer illustrated in FIG. 6 includes a central processing unit (CPU) 150 that controls the operation of the knife holder, a memory 151, a touch panel 152, a display monitor 153, and an analog-to-digital (A/D) converter 154. An output signal of the A/D converter 154 is supplied to a linear sensor 155.

In the memory 151, values such as a diameter of the upper blade knife 1, a target offset amount, and an overlap amount between the upper blade knife 1 and the lower knife 3 are input in advance, and these values can be rewritten as needed. Then, the CPU 150 receives information related to a position of the knife holder from the linear sensor 155, and performs control so as to operate a raising/lowering air cylinder on the basis of a program prepared in advance and move the knife holder to a predetermined position. In one example, the predetermined position is a position stored in advance in the memory 151 as an origin of the knife holder. Values such as the overlap amount can be input via the touch panel 152, and the information related to the position of the knife holder from the linear sensor 155 can be displayed on the display monitor 153.

The operator, when performing a necessary operation on the touch panel 152 while checking numerical values displayed on the display monitor 153, can set the upper blade knife 1 and the lower blade knife 3 to a desired positional relationship without visually confirming a vertical positional relationship between the two in a narrow location, and thus does not need to manually adjust the overlap amount and the like.

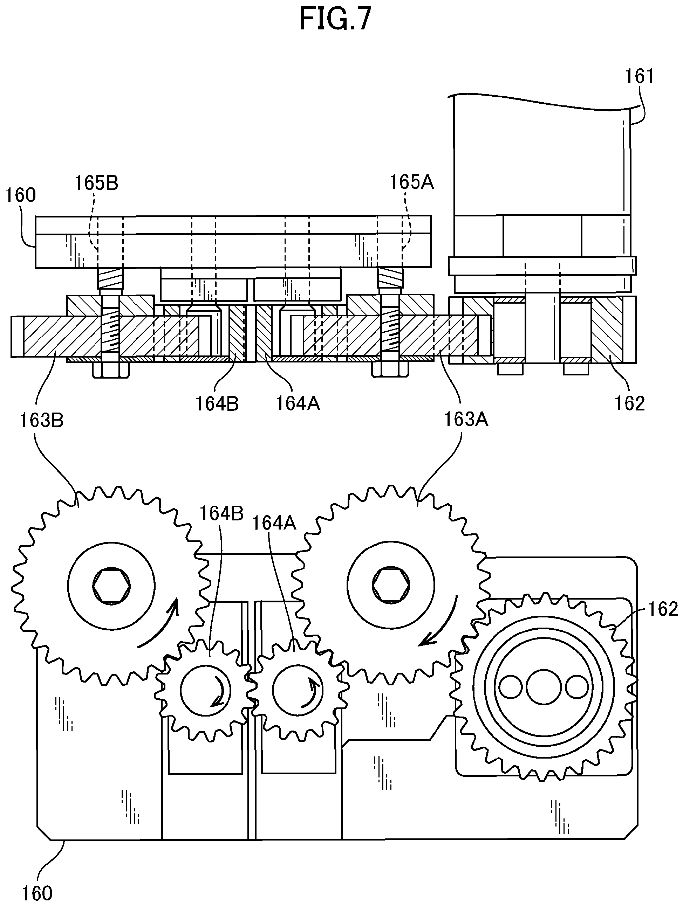

Next, adjustment of the toe-in angle by a screw plate 160 illustrated in FIG. 5 will be described. FIG. 7 illustrates a top view (upper side) and a front view (lower side) of the screw plate 160 removed from the knife holder in FIG. 5. The screw plate 160 is provided with a stepping motor 161, a spur gear 162 attached to a shaft of this stepping motor 161 and directly driven by the stepping motor 161, a spur gear 163A that meshes with the spur gear 162, an auxiliary gear 164A that meshes with the spur gear 163A, an auxiliary gear 164B that meshes with the auxiliary gear 164A, and a spur gear 163B that meshes with the auxiliary gear 164B. Further, a screw 165A is integrally attached to a shaft of the spur gear 163A, and a screw 165B is integrally attached to a shaft of the spur gear 163B. In this example, both the screw 165A and the screw 165B are right-handed screws, but both may be left-handed screws.

With reference to FIG. 5(C), a turning section 170 shaded by oblique lines is attached to a lower portion of a piston raising/lowering part 172 shaded in a crisscross pattern so as to be turnable by a rotating shaft 171. The turning section 170 is provided with two screw plate attachment parts 170A, 170B, to which the screw plate 160 is fixed. The screws 165A, 165B of the screw plate 160 can respectively abut against two push-pull points 171A, 171B provided on the piston raising/lowering part 172.

The spur gear 162, the spur gear 163A, the auxiliary gear 164A, the auxiliary gear 164B, and the spur gear 163B mesh with one other as described above and thus, when the spur gear 162 is driven by a motor, each of the gears also rotate. At this time, the two auxiliary gears 164A, 164B are provided in the middle, and thus the spur gears 163A, 163B rotate in opposite directions. Therefore, when the motor rotates counterclockwise, the screw 165A moves in a direction of pushing the push-pull point 171A of the piston raising/lowering part 172, and the screw 165B moves in a direction opposite thereto, pulling the push-pull point 171B of the piston raising/lowering part 172. On the other hand, when the motor rotates clockwise, the screw 165B moves in a direction of pushing the push-pull point 171B of the piston raising/lowering part 172, and the screw 165A moves in a direction opposite thereto, pulling the push-pull point 171A of the piston raising/lowering part 172.

The screws 165A, 165B engage the auxiliary gears 164A, 164B in a pre-applied pressure state. Thus, backlash can be alleviated without incorporating a special backlash alleviation mechanism. Further, with use of a fine-pitch screw for thrust generation, it is possible to increase a reduction ratio, thereby suppressing the effects of backlash to a minimum in the event there is backlash between the spur gear 162 and the spur gear 163A. By examining a rotation amount of the motor and a change amount in the toe-in angle in advance, the operator can remotely adjust the toe-in angle without actually touching the knife holder. This can reduce the risk that the operator must approach the slitter device when powered on. Further, with the toe-in angle being easily adjustable, various sheet-like raw materials can be cut with high cut-edge quality. In one example, the memory 151 stores in advance data related to the relationship between the rotation amount of the motor and the change amount in the toe-in angle, and the CPU 150 can refer to this data and control the motor so that the rotation amount of the motor corresponds to the input of the toe-in angle from the operator or the like, allowing the operator to adjust the toe-in angle without actually touching the knife holder.

In the example illustrated in FIG. 7, the two auxiliary gears 164A, 164B are provided and the screw 165A and the screw 165B rotate in the same direction. However, if only one auxiliary gear is provided and the two screws rotate in opposite directions, one screw can move in the direction of pushing the turning section and the other screw can move in a direction opposite thereto, pulling the turning section, as in the embodiment illustrated in FIG. 7. In general, when an even number of auxiliary gears are provided, the spur gears 163A, 163B rotate in opposite directions, and when an odd number of auxiliary gears are provided, the spur gears 163A, 163B rotate in the same direction. The direction of rotation of the spur gears 163A, 163B and the direction of rotation of the screws can be selected according to the actual situation of each slitter device.

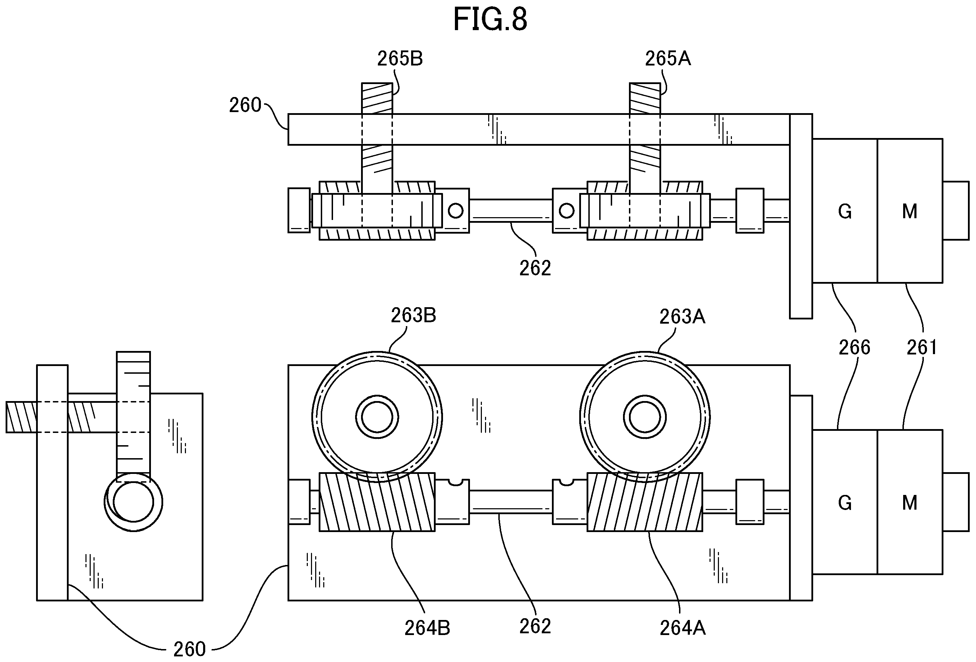

FIG. 8 illustrates a modified example of the screw plate illustrated in FIG. 7. An upper portion of FIG. 8 is a top view and a lower portion of FIG. 8 is a front view. A screw plate 260 in FIG. 8, instead of the spur gear 162 and the auxiliary gears 164A, 164B in FIG. 7, is provided with a shaft 262 in parallel with the screw plate 260, and the shaft 262 is provided with worm gears 264A, 264B meshing with worm wheels 263A, 263B, respectively. The worm gears 264A, 264B are oriented opposite to each other.

The shaft 262 is rotationally driven by an output shaft of a motor 261 via a gear 266. The motor 261 is desirably a motor with a rotation amount sensor capable of detecting a rotational frequency by detecting a magnetic field generated by a magnet attached to the rotating shaft with a Hall element, for example. When the motor 261 rotates, the screw 265A attached to the worm wheel 263A and the screw 265B attached to the worm wheel 263B rotate in opposite directions due to the opposite orientations of the worm gears 264A, 264. By making the screw 265A and the screw 265B either the same right-handed screw or the same left-handed screw, it is possible to turn the turning section by the rotation of the screw 265A and the screw 265B in opposite directions, with one pushing the turning section and the other pulling the turning section. Alternatively, even if the worm gears 264A, 264 are oriented in the same direction and one of the screw 265A or the screw 265B is a right-handed screw and the other is a left-handed screw, it is possible to turn the turning section in a similar manner.

In the example in FIG. 8, the pressurization adjustment can be performed by loosening the screw for fixing the worm gear, making positional adjustments in the direction in which pressure is applied, and then fixing the screw.

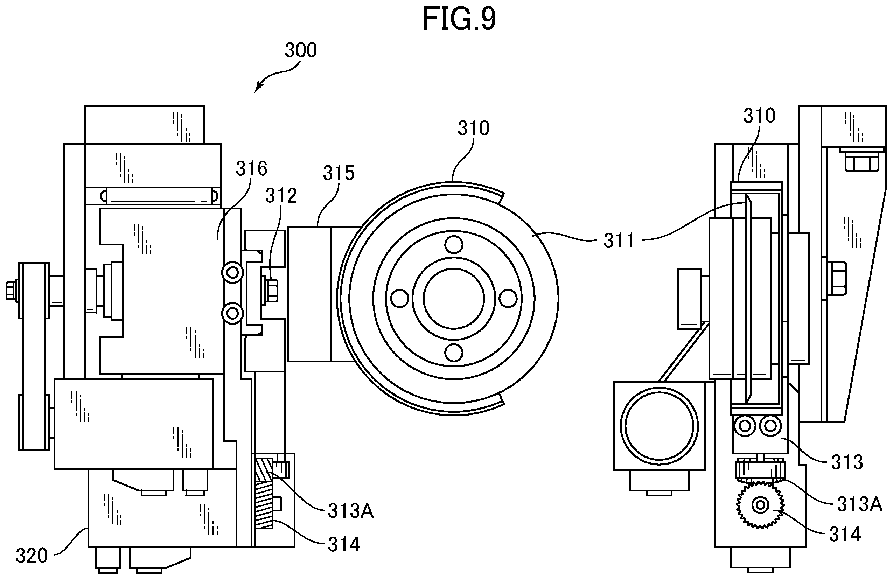

FIG. 9 illustrates a knife holder 300 including a toe-in angle adjustment mechanism according to yet another embodiment of the present invention. The left side of FIG. 9 is a side view and the right side of FIG. 9 is bottom view (that is, from the lower blade knife side). When actually attached to the slitter device, the knife holder 300 is attached in a state in which the drawing on the left side in FIG. 9 is rotated 90 degrees to the right so that an upper blade knife 311 protruding from a knife cover 310 faces downward.

The knife holder 300 in FIG. 9 is provided with an extension member 313 pivotally attached to a raising/lowering body 316 (example of an "upper blade knife raising/lowering part" in the claims) of the knife holder 300 by a bolt 312. The extension member 313 extends to a downward side (distal end side) on the left side of FIG. 9, and a helical gear 313A is formed at a distal end portion opposite to the pivotally-attached side. The helical gear 313A meshes with a helical gear 314, and the helical gear 314 is connected to an output shaft of a stepping motor 320 and is rotationally driven by the stepping motor 320. **In** the vicinity of the bolt 312 of the extension member 313, a knife cartridge (example of an "an upper blade knife mounting section" in the claims) including a contact pressure sensor 315, the knife cover 310, and the upper blade knife 311 is attached to the right side of the drawing on the left side in FIG. 9.

The extension member 313 is pivotally attached to the knife holder 300 by the bolt 312, but is not completely fixed. Accordingly, when the helical gear 314 is rotationally driven by the stepping motor 320, the extension member 313 and the knife cartridge attached thereto swing about a shaft of the bolt 312 via the spur gear 313A meshing with the helical gear 314, in a direction orthogonal to the paper surface of the drawing on the left side in FIG. 9 (left-right direction of the drawing on the right side in FIG. 9). By this swing, a rotation surface of the upper blade knife rotates, making it possible to change the toe-in angle of the upper blade knife 311 relative to the lower blade knife (not illustrated). Accordingly, by examining the rotation amount of the stepping motor 320 and the change amount in the toe-in angle in advance, the operator can remotely adjust the toe-in angle without actually touching the toe-in angle adjustment mechanism. This makes it possible to reduce a risk associated with the operator approaching the slitter device when powered on. In one example, the memory 151 stores in advance data related to the relationship between the rotation amount of the motor and the change amount in the toe-in angle, and the CPU 150 can refer to this data and control the motor so that the rotation amount of the motor corresponds to the input of the toe-in angle from the operator or the like, allowing the operator to adjust the toe-in angle without approaching the slitter device.

In each slitter device according to the embodiments of the present invention described above, the toe-in angle can be adjusted to an appropriate value on the basis of the results obtained by examining the rotation amount of the motor and the change amount in the toe-in angle in advance, making it possible to keep the cut-edge quality of the sheet-like raw material consistently at a high level as compared with known devices, and thus suppress the occurrence of burrs and chips and cut not only paper but also thin metal film, thin plastic film, and the like that demand high cut-edge quality in particular.

Although the present invention has been described above on the basis of the embodiments of the invention, the technical scope of the present invention is not limited to the embodiments disclosed herein, and various changes can be made within the scope of the gist of the present invention and are also included in the technical scope of the present invention.

### Reference Signs List

1, 311: Upper blade knife
3: Lower blade knife
40: Knife holder
   160, 206: Screw holder
   161: Stepping motor
   163A, 163B, 263A, 263B: Spur gear
   164A, 164B: Auxiliary gear
   165A, 165B, 265A, 265B: Screw
264A, 264B: Worm gear
312: Bolt
313: Extension member
313A: Helical gear
314: Spur gear
320: Stepping motor

## Claims

1. A slitter device configured to bring an upper blade knife having a disc shape and a lower blade knife into contact with each other, supply a sheet-shaped raw material between the upper blade knife and the lower blade knife, and cut the sheet-shaped raw material, the slitter device comprising:
upper blade knife mounting section in which an upper blade knife is mounted;
an upper blade knife raising/lowering part configured to raise and lower the upper blade knife mounting section;
an extension member to which the upper blade knife mounting section is fixed, the extension member being pivotally attached to the upper blade knife raising/lowering part so that a rotation surface of the mounted upper blade knife rotates and being formed with an end gear at an end portion on a side opposite to the upper blade knife mounting section;
a gear member configured to mesh with the end gear of the extension member; and
a drive means configured to drive the gear member, wherein
the drive means is configured to drive the gear member to swing the extension member and adjust a toe-in angle of the upper blade knife.

2. The slitter device according to claim 1, wherein the drive means is a stepping motor or a motor having a rotational frequency that can be known.

3. A slitter device configured to bring an upper blade knife having a disc shape and a lower blade knife into contact with each other, supply a sheet-shaped raw material between the upper blade knife and the lower blade knife, and cut the sheet-shaped raw material, the slitter device comprising:
an upper blade knife mounting section in which an upper blade knife is mounted;
an upper blade knife raising/lowering part to which the upper blade knife mounting section is attached, the upper blade knife raising/lowering part being configured to raise and lower the upper blade knife mounting section and being turnable about a vertical axis of a device main body;
a screw plate provided to the upper blade knife raising/lowering part, the screw plate including a first gear provided with a first screw and driven by a drive means, a second gear provided with a second screw, and a rotation transmission means configured to transmit rotation of the first gear to the second gear; and
the drive means configured to drive the first gear, wherein
the drive means driving the first gear rotates the first gear and the second gear, causing an operation in which one of the first screw or the second screw is pushed out in a direction orthogonal to the screw plate and the other is pulled out in a direction orthogonal to the screw plate, thereby turning the upper blade knife raising/lowering part about a device main body and adjusting a toe-in angle of the upper blade knife.

4. The slitter device according to claim 3, wherein the drive means is a stepping motor or a motor having a rotational frequency that can be known.

5. The slitter device according to claim 3, wherein the rotation transmission means is constituted by an odd number or an even number of auxiliary gears provided between the first gear and the second gear.

6. The slitter device according to claim 3, wherein the rotation transmission means is constituted by a first worm gear and a second worm gear formed on a single shaft, the first worm gear being configured to mesh with the first gear, and the second worm gear being configured to mesh with the second gear to transmit the rotation of the first gear to the second gear.
